# EUROPÄISCHE PATENTANMELDUNG

(11) **EP 0 555 494 A1**
(43) Veröffentlichungstag der Anmeldung: **18.08.1993**
(21) Anmeldenummer: 91118480.2
(22) Anmeldetag: 30.10.1991
(51) Int. Cl.: F28F 1/16, F24D 3/16

(54) **Luftkanal-Radiator**

(71) Anmelder: Klix, Uwe, D-78628 Rottweil (DE)
(72) Erfinder: Klix, Uwe, D-78628 Rottweil (DE)

(57) **Zusammenfassung**

Luftkanal-Radiatoren werden vorwiegend für die dezentrale Frischluftversorgung und Temperierung von Werk- und Verkaufshallen, sowie ähnlichen Räumen bzw. Raumzonen verwendet. Zum Beispiel wie in Figur 2.
Die Installation erfolgt meistens raumsparend unter der Raumdecke. Zum Beispiel wie in Figur 1.
Hierbei funktioniert der mit Durchflußrohren (4) ausgestattete Luftkanal-Außenmantel (13) als Strahlungsfläche (1) zum Raum, und der Kanal-Innenmantel (13) als Wärmetauscherfläche (57) für die durchströmende Frischluft.
Die Durchflußrohre (4) werden normalerweise mit Heizungswasser, bzw. Dampf, oder mit Kühlwasser durchspült.
Die vozugsweise im Stranpreßverfahren aus Leichtmetall einstückig, oder aus mehren Teilen zusammengesetzten Luftkanalradiatoren werden vorzugsweise mit flexiblen Durchflußschläuchen (7) und verdrehsicheren Verbindungsachsen (20) miteinander verbunden.
Die Zwischenräume (58)werden mit Muffen (8) bzw. Endmuffen (9) abgedeckt und fungieren gleichzeitig als Luftdruck-Ausgleichskammer.
Bei Ausführung (A) erfolgt der Luftaustritt (14) zwischen Luftkanal-Außenmantel (13) und Muffen-Innenmantel (13).
Bei Ausführung (B) durch Löcher (15) im Muffenmantel (8,9) bzw. im Kanalmantel (13)
Bei Ausführung (C) sind die Luftkanal-Mäntel (13) mit durchgehenden Längsschlitzen (16) ausgestattet, welche je nach Bedarf mit einem Abdeckprofil (17) ganz oder teilweise abgedeckt werden können.
Bei einer anderen Ausführung wie in Figur 11 wird in ein normales Lüftungsrohr (34) ohne Durchflußrohre (4) ein Wärmetauscher (56) mit Durchflußrohren (4) eingelegt.

## Beschreibung

Die Erfindung betrifft Lüftungsrohre oder Kanäle mit vorwiegend im Kanalmantel integrierten Durchflußrohren für ein Heiz- oder Kühlmedium, sowie identischen plattenförmigen oder rohrförmigen Luftkanaleinsätzen, welche in solche Frischluft-Kanalradiatoren nach jeweiligen Bedarf eingesetzt werden können.

Außer den handelsüblichen Deckenstrahlplatten ohne Frischluftaufbereitung gibt es eine solche Ausführung mit einem aufgesetzten u-förmigen Isolier-Formteil, welches zusammen einen Luftkanal mit nur einer Wärmetauschfläche zum Luftkanal-Innenraum und einer Deckenstrahlfläche zum Raum bzw. Hallenbodenfußboden bildet.
Eine solche Ausführung ist unter der deutschen Patentschrift 2138667 bekannt.
Diese Ausführung hat den Nachteil, daß zum Beispiel nur etwa die Hälfte der Kanalmantelinnenfläche für den Wärmetausch genutzt werden kann.
Zudem können solche Ausführungen nicht direkt mit den genormten Lüftungsrohren, Rohrventilatoren und Rohrformstücken zu einer optischen Einheit zusammen gebaut werden.

Der Erfindung liegt die Aufgabe zu Grunde, einen Frischluft-Kanalradiator mit Einsätzen der eingangs genannten Art zu schaffen, der eine veränderbare optimale Wärmeübertragung auf kurzer Kanallänge ermöglicht, der ein geringes Gewicht aufweist, leicht herstellbar ist, eine einfache Lagerhaltung und Transportmöglichkeit aufweist, der eine einfache Bearbeitung und Montage ermöglicht.

Derartige Frischluft-Kanalradiatoren lassen sich unter Anwendung des in Anspruch 1 angegebenen Verfahrens sehr kostengünstig als rostfreie Meterware in Längen von etwa 50 Metern herstellen und mit der jeweils benötigten Länge von dieser Meterware absägen. Dabei bestehen für eine vorteilhafte Ausgestaltung mehrere in den Ansprüchen angegebene Möglichkeiten, auf deren Vorteile im Zusammenhang mit der nachfolgenden Bespielsbeschreibug näher hingewiesen wird.

In den beiliegenden Zeichnungsfiguren sind mehrere Ausführungs- und Anwendungsbeispiele dargestellt. Es zeigt
Figur 1 eine schaubildliche Darstellung einer Halle, in der rohrförmige Frischluft-Kanalradiatoren mit oder ohne Frischluftzufuhr, sowie plattenförmige Kanalradiatoren-Wandteile bzw. Kanalradiatoren-Einsätze als Deckenstrahlungsheizung unter dem Dach aufgehängt sind.
Figur 2 eine schematische Draufsicht der Luftkanal-Radiatoren nach Figur 1, in drei Ausführungsvarianten mit unterschiedlichen Luftauslässen.
Figur 3 einen Teil-Längsschnitt der Elemente A in Figur 2.
   Figur
Figur 4 einen Teil-Längsschnitt des Elements B in Figur 2.
Figur 5 einen Teil-Längsschnitt des Elements C in Figur 2.
Figur 6 einen Querschnitt durch einen rechteckigen Luftkanal-Radiator mit vier Durchflußrohren, Isolierung und Verbindungsmuffe, sowie ein zusätzlich eingelegtes Wärmetauscherprofil.
Figur 7 eine runde Variante zu Figur 6 mit Luftschlitzen.
Figur 8 eine konvexe Variante zu Figur 7.
Figur 9 eine runde Variante zu Figur 6 , jedoch aus Blech mit eingeschweißten Durchflußrohren.
Figur 10 eine Variante zu Figur 6, jedoch fünfteilig.
Figur 11 ein handelsübliches Lüftungsrohr mit einem lose eingeschobenen Wärmetauscher mit vier Durchflußrohren.
Figur 12 eine Verbindungsachse zwischen zwei benachbarten Luftkanal-Radiatoren.
Figur 13 eine Stirnansicht der Figur 12

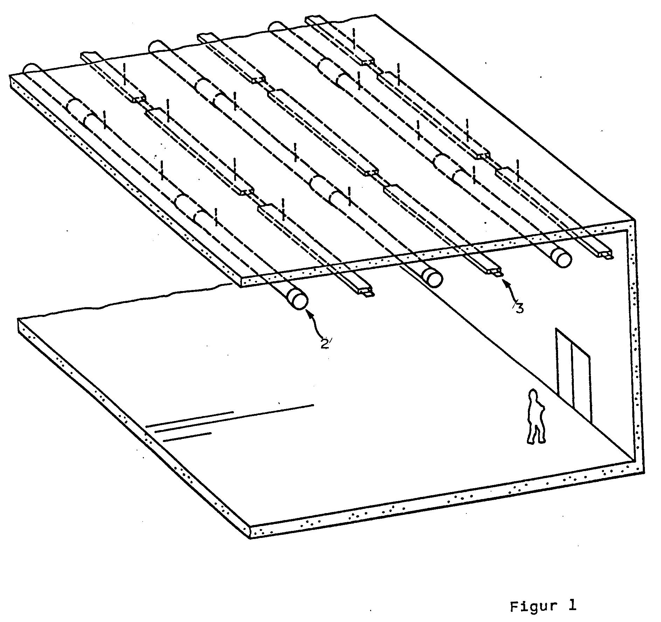

In Figur 1 ist ein Hallenausschnitt mit an der Decke befestigten Frischluftkanal-Radiatoren 2 und plattenförmigen Kanalwand-Elementen 3 mit Durchflußrohren 4 bzw. identischen Luftkanal-Einsätzen 5 dargestellt.

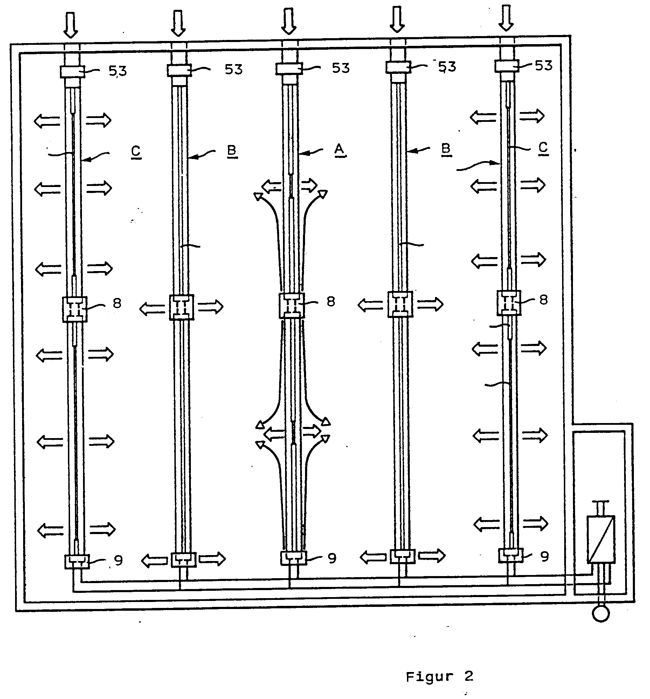

In Figur 2 wird eine Draufsicht auf drei unterschiedliche Luftausblasmöglichkeiten mit zwei Kanalradiatoren-Grundausführungen 2, die Ausführungen A, B und C, gezeigt, welche unterschiedliche Luftausblas-Arten aufweisen.

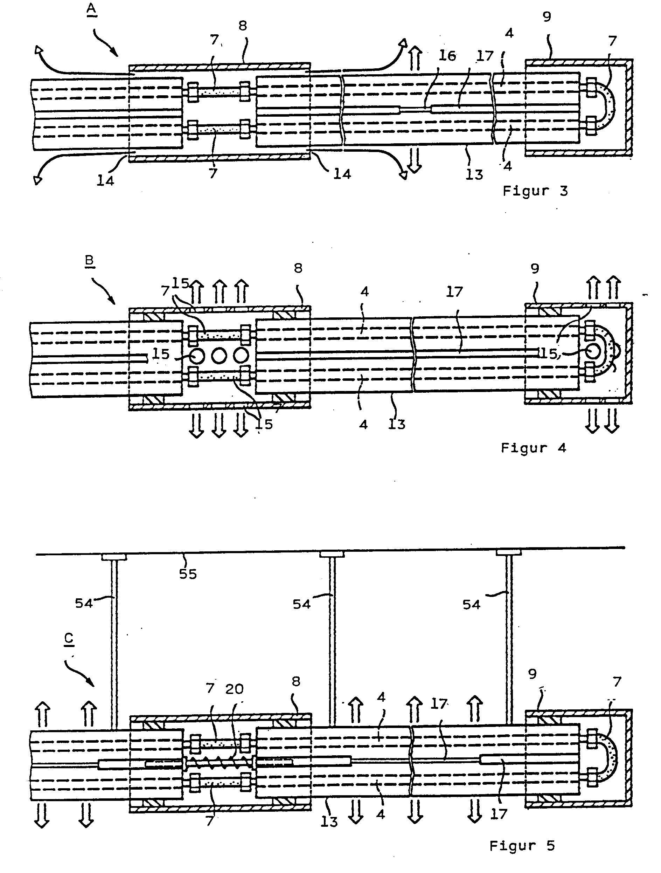

In Figur 3 wird die Ausführung A mit zwei Durchflußrohren gezeigt, mit Verbindungsschläuchen 7, mit Muffen 8 und Endmuffen 9, welche die Verbindungsstellen 10 und 11 umschließen, und somit eine Luftdruck-Ausgleichkammer 12 bilden. Zudem wird bei dieser Ausführung A der sogenannte Coanda- oder Wirbelgrenzflächen-Effekt ausgenutzt, indem die bereits im Kanal-Radiator 2 vortemperierte Luft nochmals durch Reibung am Luftkanal-Außenmantel 13 nachtemperiert wird. Der Luftaustritt 14 erfolgt hierbei durch den Luftspalt 14 zwischen Muffe 8, 9 und dem Luftkanal-Außenmantel 13.

Figur 4 entspricht Figur 3, jedoch mit dem Unterschied, daß der Luftaustritt 14 durch Löcher 15 in den Muffen 8 und 9 erfolgt. Ausführung B.

In Figur 5 erfolgt der Luftaustritt 14 aus eingeformten Längsschlitzen 16 , welche jeweils nach Bedarf teilweise oder ganz mit einer Abdeckleiste 17 abgedichtet werden können. Ausführung C.

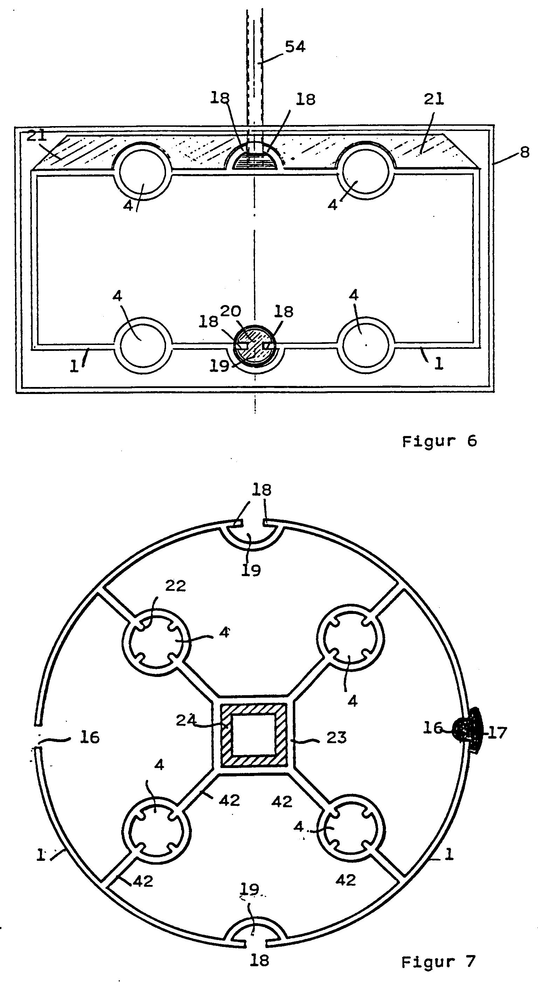

In Figur 6 wird ein rechteckiger einstückiger Kanal-Radiator 2 mit vier Durchflußrohren 4, zwei Schienenpaaren 18 mit Ausnehmung 19, einer Verbindungsachse 20, einer Isolierung 21 und Muffe 8 .

Figur 7 zeigt einen Luftkanal-Radiator der Ausführung C in Figur 5 mit vier innenliegenden Durchflußrohren 4, mit am Rohrinnenmantel 4 angeformten Rippen 22, welche durch Reibung die Wärmeübertragung verbessern. Zudem befindet sich im Luftkanal-Zentrum ein Vierkant-Kanal 23 in welchen sich ein Vierkantprofil 24 einschieben läßt, welches als Verdrehsicherung zu einem benachbarten Luftkanal-Radiator 2 fungiert.

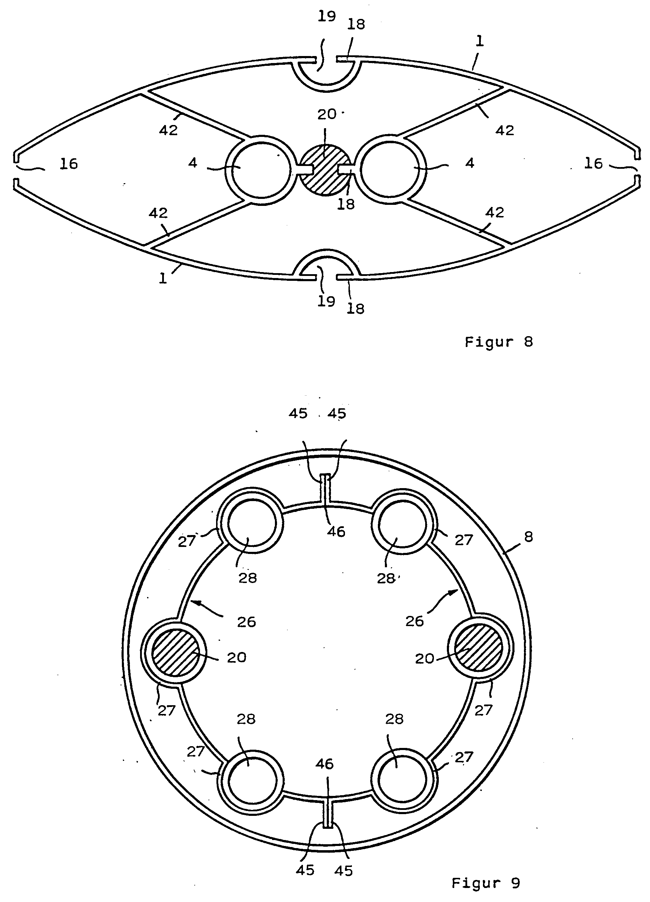

Figur 8 zeigt eine konvexe Variante zu Figur 7, welche in der vertikalen Richtung eine große Strahlfläche 1 aufweist.

In Figur 9 wird eine Ausführung aus Blech dargestellt, bestehend aus zwei Halbschalen 26 mit Ausbuchtungen 27 und eingeschweißten Durchflußrohren

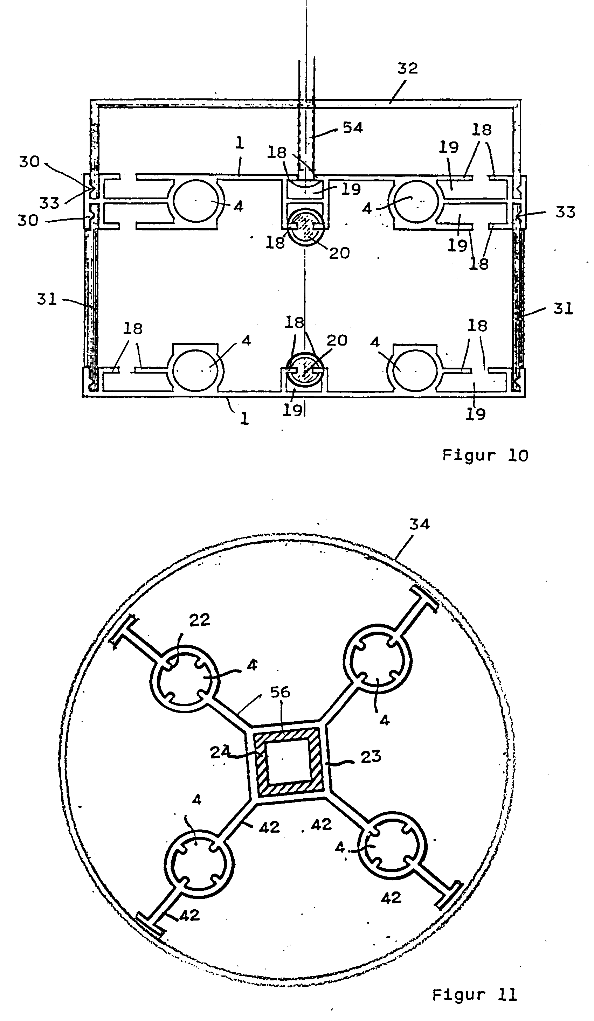

Figur 10 zeigt eine Variante zu Figur 6, jedoch fünfteilig, bestehend aus zwei Kanalwand-Elementen 3 mit jeweils zwei Durchflußrohren 4 , mit mittig und seitlich ange formten Schienenpaaren 18 und Ausnehmung 19, sowie an den Kanalwand-Außenkanten 3 angeformten Einfsßprofilen 29 mit nach innen angeformten Haltezähnen 30, welche zur Aufnahme der zwei rohrlosen Wandplatten 31 und der u-förmigen Luftkanal-Hülle 32 mit Nut 33 dienen.

Figur 11 zeigt ein handelsübliches rundes Lüftungsrohr 34 mit einem einstückigen eingeschobenen Wärmetauscher 35 mit vier strahlenförmig angeordneten Durchflußrohren 4 und im Zentrum einen Vierkant-Kanal 23, der für die Aufnahme einer verdrehsicheren Verbindungsachse 24 vorgesehen ist.

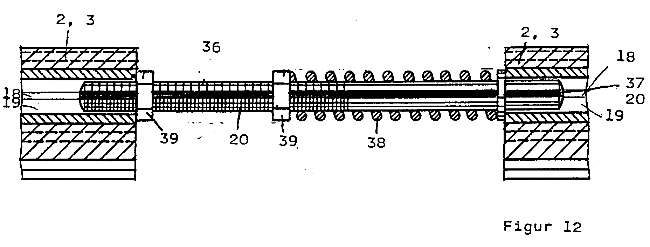

Figur 12 zeigt eine Verbindungsachse 20 mit Gewinde 36 und Nut 37, sowie einer Schraubenfeder 38 und Stellmutter 39, welche als Abstands- und VerdrehSicherung zwischen zwei benachbarten Luftkanal-Radiatoren 2, bzw. zwei Kanalwand-Elementen 3 , oder zwei Wärmetauschern 35 eingesetzt wird.

Figur 13 zeigt ein plattenförmiges Mehrzweck-Profil mit Durchflußrohren 4, seitlich angeformten Einfaßprofilen 29 mit Verzahnung 30, seitlich und mittig angeformten Schienenpaaren 18 mit Ausnehmung 19, sowie plattenformige Befestigungsleisten 40. Dieses Profil kann sowohl zum Bau von Luftkanal-Radiatoren 2 verwendet werden, als Einschub-Wärmetauscher 6 , als Deckenradiator 3 oder Wandradiator 41 .

## Patentansprüche

1. Luftkanal-Radiator 2 zur Klimatisierung von Räumen mittels fließender Heiz- oder Kühlträger, welche durch Rohre 4 fließen, die vorwiegend im Kanalmantel 13 integriert sind, und die durchströmende Frischluft durch Wärmetausch temperieren, wobei der Luftkanal-Mantel 13 gleichzeitig als Deckenstrahlkörper funktioniert, dadurch gekennzeichnet, daß dieser einstückig im Strangpressverfahren aus Aluminium hergestellt ist, mit Durchflußrohren 4 ausgestattet ist, daß die Rohre 4 mit Innenrippen 22 und Außenrippen 47 ausgestattet sind, daß jeder Kanal-Radiator 2 mit mindestens einem oder mehreren Schienenpaaren 18 mit Ausnehmung 19, für die Aufnahme von Verbindungsachsen 20 und Befestigungselementen 48 ausgestattet ist.

2. Luftkanal-Radiator nach Patentanspruch 1, daß dieser mehrteilig ist, und mit mindestens einem einstückigen Luftkanal-Wandprofil 3,mit mindestens einem Durchflußrohr 4 , ausgestattet ist, zudem an den beiden Außenkannten mit ein- oder beidseitig angeformten Einfaßprofilen 29 ausgestattet ist, mit mindestens jeweils einem in das Einfaßprofil 29 hineinragenden Haltezahn 30 für die Aufnahme und Verzahnung von flachen oder hüllenförmigen Luftkanal-Wänden 32 mit Nut 33 ausgestattet ist, und beidseitig und mittig mit Schienenpaaren 18 mit Ausnehmung 19 ausgestattet ist

3. Luftkanal-Radiator nach Patentanspruch 1 und 2, daß der Luftkanal-Radiatormantel 13 die Durchflußrohre 4 umhüllt, und daß diese durch einen oder mehrere Leitstege 42, deren Anzahl und Positionierung gemäß der erforderlichen Medium- und Mantelflächen-Temperatur 1 festgelegt sind.

4. Luftkanal-Radiator nach Patentanspruch 2, daß dieser aus einem einteiligen oder mehrteiligen runden oder eckigen Blechmantel 25 mit Ausnehmungen 27 für Durchflußrohre 28 besteht, welche mit dem Mantel 25 fest verschweißt sind, und daß die Kanalmantel-Elemente 26 an den Verbindungsstellen 45 stufenlose einstellbare Luftausblasschlitze 46 aufweisen können.

5. Luftkanal-Radiator nach Patentanspruch 1 bis 4, daß zwischen zwei benachbarten Luftkanal-Radiatoren 2, bzw. zwei Wärmetauscher-Elementen 3 und 5 , wie in Figur 5, in die beiden Schienenpaare 18 mit Ausnehmung 19 eine Gewinde-Verbindungsachse 36 mit mit Nut 37, sowie Schraubenfeder 38 und Stellmuttern 39, als abstands- und Verdrehsicherung eingesetzt wird.

6. Luftkanal-Radiator nach Patentanspruch 1 und 2, sowie Figur 4, daß die Muffen 8 und 9 mit Löchern 49 und Schlitzen 50 für den Luftaustritt 51 versehen sind.

7. Luftkanal-Radiator nach Patentanspruch 1 und 2, sowie Figur 5, daß die Außenwand 1 der Elemente A in der Längsrichtung mit durchlaufenden Schlitzen 16 für den Luftaustritt 14 versehen sind, und daß diese mit einem Dichtprofil 17 abgedeckt werden können.

8. Luftkanal-Radiator nach Patentanspruch 1 und 2, sowie Figur 3, daß zwischen den Muffen 8 und 9 und dem Außenmantel 13 der Luftkanal-Radiatoren 2 ein ringförmiger Luftspalt 14 , oder Teilspalt für den Luftaustritt vorhanden ist, welcher den Coanda-Effekt erzeugt.

9. Luftkanal-Radiator nach Patentanspruch 1 bis 8, und Lüftungsrohre ohne integrierte Durchflußrohre 4, daß in diese zusätzlich ein oder mehrere Wärmetauscher 3, 56 wie in Figur 11 lose eingeschoben sind.

10. Luftkanal-Radiator nach Patentanspruch 1 bis 11, daß zwei benachbarte Elemente 2, 3, 56 mit einer verdrehsicheren Führungsachse 20 , mit Gewinde 36 und Nut 37, sowie Schraubenfeder 38 und Stellmuttern 39, verbunden sind. Figur 12
